# FASCICULE DE BREVET EUROPEEN

(11) **EP 2 389 060 B1**
(45) Date de publication et mention de la délivrance du brevet: **30.04.2014**
(21) Numéro de dépôt: 10720334.1
(22) Date de dépôt: 25.01.2010
(51) Int. Cl.: A01D 33/00, A01D 33/10

(54) **DISPOSITIF D'ENTREPOSAGE POUR PRODUITS D'AGRICULTURE, EN PARTICULIER LEGUMES DU TYPE ALLONGE ET SOUPLE, NOTAMMENT POIREAUX, ET PROCEDE A CET EFFET**
VORRICHTUNG ZUR LAGERUNG VON LANDWIRTSCHAFTSPRODUKTEN, INSBESONDERE VON LANGEM UND BIEGSAMEM GEMÜSE, Z. B. LAUCH, UND ENTSPRECHENDES VERFAHREN
STORAGE DEVICE FOR AGRICULTURAL PRODUCTS IN PARTICULAR VEGETABLES OF THE LONG AND FLEXIBLE TYPE IN PARTICULAR LEEKS AND CORRESPONDING METHOD

(30) Priorité: 23.01.2009 BE 200900042; 25.09.2009 BE 200900591
(43) Date de publication de la demande: 30.11.2011
(73) Titulaire: Verhoest, Marc, 8800 Rumbeke (BE)
(72) Inventeur: Verhoest, Marc, 8800 Rumbeke (BE)
(74) Mandataire: Chielens, Kristof
(86) Numéro de dépôt international: PCT/BE2010/000004
(87) Numéro de publication internationale: WO 2010/083576

(56) Documents cités:
- EP-A- 0 280 336
- EP-A1- 1 554 918
- EP-A2- 1 449 423
- EP-B1- 1 638 386
- BE-A- 644 454
- BE-A6- 1 016 349
- DE-A1- 19 933 589
- US-A- 3 989 110
- US-A1- 2005 050 875

## Description

### DOMAINE DE L'INVENTION

La présente invention se rapporte à un dispositif d'entreposage de produits d'agriculture, en particulier des légumes du type allongé et souple tels que des poireaux. Elle se rapporte plus particulièrement à un dispositif installé solidaire d'un véhicule tracteur et coopérant avec un dispositif d'arrachage de légumes.

Dans ce domaine, il existe un besoin d'amélioration des dispositifs existants, les machines devant être de plus en plus automatisées, tout en fournissant une qualité de travail la meilleure possible. Pour les poireaux en particulier, le conducteur du tracteur doit pouvoir récolter seul, et obtenir des poireaux correctement entreposés, sans risque d'abîmer les poireaux, ni risque de dysfonctionnement perturbant le déroulement de la récolte. Par ailleurs le dispositif d'entreposage doit permettre ultérieurement lors de son vidage une récupération automatique des légumes allongés sur un convoyeur, disposés bien l'un à côté de l'autre.

### ETAT DE LA TECHNIQUE

Le document EP-A-0 280 336 divulgue un dispositif d'entreposage d'objets allongés dans une bande entreposée en spirale. L'axe de rotation du tambour est horizontal, le chargement sur la bande se faisant par objets posés à plat sur la bande. La bande contient des rainures recevant chacune un objet. La difficulté de ce genre de solution réside dans le fait que le remplissage ne peut se faire qu'avec une intervention manuelle, aucune solution d'alimentation automatique n'étant exposée.

Le document BE 644 454 divulgue un dispositif d'entreposage de poireaux dans une bande en spirale, en vue d'alimenter une machine de repiquage. L'axe de rotation est horizontal, les poireaux tombent par gravité dans le dispositif de repiquage à intervalles réguliers. Il manque également à cette solution une alimentation qui permette d'éviter l'intervention manuelle.

Le document EP 1638386 enseigne un dispositif dans lequel les poireaux sont déversés dans un conteneur par couches successives. Dans un dispositif tel qu'exposé dans ce document, le stockage est certes automatique, mais les poireaux tombent d'une certaine hauteur. Cela provoque des chocs qui peuvent endommager les poireaux, et ne permet pas de garantir qu'ils sont bien disposés les uns à côté des autres. Or ceci est une condition pour qu'un entreposage permette une bonne conservation des légumes.

Le document EP 1554918 expose une solution avec un panier d'entreposage à hauteur réglable, pour faire descendre ledit panier au fur et à mesure de son remplissage, et ainsi limiter la hauteur de chute à tout moment du remplissage. Les inconvénients précités sont réduits, mais ne sont pas éliminés pour autant.

Par ailleurs, quand on veut reprendre les légumes, pour le lavage notamment, il est impossible de les disposer sur une bande les uns après les autres, parallèles les uns aux autres. En déversant un conteneur, les légumes ont plutôt tendance à se mettre en vrac et n'importe comment, ce qui impose une intervention manuelle pour les remettre correctement en place pour l'appareil aval.

### BUT DE L'INVENTION

Il est donc nécessaire de trouver une solution aux problèmes exposés ci-dessus, et de proposer un dispositif d'entreposage permettant un entreposage automatique sur le véhicule tracteur, dans des conditions de bonnes conservation des légumes allongés, et de manière telle qu'il soit possible de manière automatique de disposer ces légumes ultérieurement sur une bande d'alimentation d'une machine aval de manière rangée les uns bien à côté des autres. La présente invention vise à apporter une telle solution.

### EXPOSE DE L'INVENTION

A cet effet, il est proposé un dispositif d'entreposage automatique de produits d'agriculture, en particulier des légumes du type allongé et souple tels que des poireaux, tel que défini dans la revendication principale 1, à savoir pour son remplissage à être installé sur un véhicule tracteur, et à coopérer avec un dispositif d'arrachage. Il est remarquable en ce qu'il comprend au moins une bande d'entreposage et un premier support comprenant un moyeu, mobile en rotation autour d'un axe, permettant un enroulement de ladite bande d'entreposage et l'entreposage desdits produits d'agriculture entre deux couches successives de ladite bande.

Selon un mode de réalisation particulier du dispositif d'entreposage de l'invention, ledit enroulement présente une forme en spirale.

Selon un mode de réalisation plus particulier du dispositif de l'invention, ledit premier support est muni d'un dispositif à cliquet, permettant d'empêcher le déroulement de la bande. Cette disposition présente l'avantage d'éviter tout risque de déroulement de la bande et par conséquent de perte de produits agricoles entreposés en cas d'arrêt du dispositif en plein champ, ou pour le trajet de retour à la ferme.

Selon un mode de réalisation plus particulier encore du dispositif de l'invention, il comprend un deuxième support comprenant un moyeu, mobile en rotation et destiné à entreposer par un enroulement la bande d'entreposage vide, et au moins un rouleau de renvoi. Ce deuxième support permet d'entreposer la bande vide, et de la mettre à disposition du premier support selon le besoin. Le rouleau de renvoi permet d'approcher la bande d'entreposage au plus près de la sortie du dispositif d'arrachage.

Selon un mode de réalisation préféré du dispositif de l'invention, le premier support est à axe de rotation sensiblement vertical lorsque le dispositif est installé sur un véhicule tracteur. Ce mode de réalisation permet une construction plus simple du dispositif. En particulier, le dispositif ne nécessite pas une grande hauteur. Par ailleurs, cette disposition permet de conserver la position verticale des produits d'agriculture concernés, depuis leur arrachage jusqu'à leur entreposage, ce qui réduit les risques de dysfonctionnement au moment de l'entreposage. En outre, le maintien de l'orientation du produit agricole depuis son arrachage jusqu'à son entreposage diminue significativement les risques d'endommagement de celui-ci.

Selon un mode de réalisation encore préféré du dispositif de l'invention, ledit support est disposé sur un châssis mobile par rapport audit véhicule tracteur. De cette façon, sa position peut être adaptée par rapport à la sortie du dispositif d'arrachage à tout moment, au fur et à mesure de l'enroulement.

Selon un mode de réalisation avantageux du dispositif de l'invention, un vérin hydraulique est disposé entre le véhicule tracteur et ledit châssis mobile en vue de son actionnement. En effet, les véhicules tracteurs utilisés habituellement en agriculture disposent d'un compresseur hydraulique.

Selon un mode de réalisation encore avantageux du dispositif de l'invention, au moins un capteur de détection de position est disposé sur un châssis fixe par rapport au véhicule tracteur à proximité du rouleau de renvoi de la bande d'entreposage le plus proche du premier support permettant de piloter ledit vérin hydraulique, de manière à positionner ledit support pour que la couche externe d'enroulement soit toujours située à proximité dudit rouleau de renvoi. De cette façon, l'introduction des produits d'agriculture dans l'enroulement peut être optimisée et réglée finement dans le but de réduire au minimum les risques d'endommagement desdits produits.

Selon un mode de réalisation encore plus avantageux du dispositif de l'invention, ledit capteur est relié à un système de distributeurs hydrauliques alimentés par le véhicule tracteur. Cela permet d'utiliser l'énergie disponible généralement sur un véhicule tracteur, et d'éviter la nécessité de fournir une énergie différente. De plus, les systèmes hydrauliques présentent l'avantage de bien résister aux conditions d'environnement difficiles rencontrées au cours d'une récolte.

Selon un mode de réalisation toujours plus avantageux du dispositif de l'invention, il comprend un actionneur monté sur ledit moyeu pour l'entraîner en rotation.

Selon un autre mode de réalisation encore très avantageux du dispositif de l'invention, il comprend une roue d'entraînement mobile autour d'un axe horizontal sensiblement sécant avec l'axe de rotation du premier support. Cette roue d'entraînement est agencée en rotation de façon qu'elle entraine la rotation dudit premier support, notamment par frottement.

Selon un mode de réalisation toujours très avantageux du dispositif de l'invention, ladite roue d'entraînement est placée à proximité de l'enroulement en cours de produits d'agriculture, de préférence en une position diamétralement opposée au point d'arrivée des produits d'agriculture par rapport à l'axe de rotation du premier support.

Selon un mode de réalisation spécifique du dispositif de l'invention, ledit premier support comprend une base sensiblement en forme de disque, au-dessus duquel les produits d'agriculture sont entreposés.

Selon un mode différent de réalisation plus spécifique du dispositif de l'invention, il comprend une base, sensiblement en forme de disque, mobile en rotation, destinée à recevoir ledit premier support, de le supporter et de l'entraîner en rotation.

Selon un mode de réalisation plus spécifique encore du dispositif de l'invention, ladite roue d'entraînement est placée au-dessus de ladite base.

Selon un autre mode préféré de réalisation du dispositif de l'invention, ladite roue d'entraînement est placée au-dessous de ladite base du premier support, respectivement de ladite base du dispositif supportant ledit premier support.

Selon un mode de réalisation particulièrement avantageux du dispositif de l'invention, ladite roue d'entraînement est attachée audit châssis fixe à proximité du rouleau de renvoi le plus proche du premier support et placée au contact du premier support en dessous de celui-ci, et qui par sa rotation entraîne la rotation dudit support de façon à contrôler sa vitesse linéaire au niveau de l'enroulement en cours, quel que soit le diamètre d'enroulement en cours. Cette disposition permet une régulation de la vitesse de rotation du premier support, grâce à une solution mécanique simple et rustique, très peu susceptible de tomber en panne. Une disposition particulièrement fiable est ainsi obtenue.

Selon un mode de réalisation simplifié du dispositif de l'invention, ladite roue d'entraînement présente le même diamètre extérieur que les tambours moteurs des bandes de maintien des produits d'agriculture sur la partie aval du dispositif d'arrachage, ladite roue et lesdits tambours étant branchés en série sur un même actionneur, ce qui permet ainsi d'obtenir des vitesses de rotations identiques et par conséquent une vitesse linéaire d'enroulement similaire à tout instant à la vitesse de sortie des produits d'agriculture du dispositif d'arrachage. Cette disposition apporte une solution très simple, avec un minimum d'actionneurs, toujours dans le même souci de simplification. Plus particulièrement, ledit actionneur est un moteur hydraulique. Ce choix permet de mettre à profit le compresseur hydraulique généralement présent sur les véhicules tracteurs couramment utilisés.

Selon un mode de réalisation fort avantageux du dispositif de l'invention, ladite bande d'entreposage présente une largeur telle que les produits d'agriculture précités sont maintenus par ladite bande sur sensiblement toute leur longueur.

Selon un mode de réalisation encore plus avantageux du dispositif de l'invention, ladite bande est constituée d'un tissage en matériau polymère, notamment polyéthylène, les chaînes et les trames étant séparées chacune de la suivante par un espace, conférant une perméabilité à ladite bande. Cela permet aux produits d'agriculture de pouvoir respirer pendant leur entreposage, et la durée d'entreposage possible en est améliorée.

Selon un mode de réalisation ingénieux du dispositif de l'invention, le support présente des ouvertures, permettant le passage de l'air dans le sens vertical, de façon à permettre une réfrigération efficace de plusieurs dispositifs d'entreposages pleins superposés dans un réfrigérateur. Il est en effet important que l'air puisse circuler entre les poireaux, pour permettre d'obtenir un temps de refroidissement des légumes suffisamment court. Lesdites ouvertures permettent cette circulation, grâce au fait que les poireaux sont disposés dans la position verticale, et permettent eux-mêmes le passage de l'air dans le sens vertical.

Selon un mode de réalisation complémentaire du dispositif de l'invention, il comprend en outre un dispositif de transport destiné à reprendre les légumes à la sortie du dispositif d'arrachage, et à les transporter jusqu'à l'arrivée au premier support.

Selon un autre mode de réalisation préféré du dispositif de l'invention, le dispositif d'arrachage comprend un prolongement en biseau équipé de rouleaux de renvoi d'extrémité de petit diamètre, en vue d'assurer une continuité du maintien des produits d'agriculture entre ledit dispositif d'arrachage et ledit dispositif d'entreposage.

Selon un autre mode de réalisation encore du dispositif selon l'invention, lesdites spires sont à axe sensiblement horizontal lorsque le dispositif est installé sur ledit véhicule tracteur. Ce mode de réalisation peut être préféré lorsque des contraintes de longueur du dispositif sont supérieures aux contraintes de hauteur, le dispositif étant alors construit d'une manière privilégiant la hauteur.

Il est nécessaire par ailleurs de proposer un dispositif de mise à plat de légumes allongés, pour une utilisation notamment lors du vidage d'un dispositif d'entreposage de légumes allongés en position verticale pour disposer lesdits légumes sur une bande d'alimentation d'une machine aval de manière rangée les uns bien à côté des autres.

Selon un mode de réalisation plus évolué du dispositif selon l'invention, il est associé, pour son vidage, à un dispositif de mise à plat contrôlée desdits produits d'agriculture, qui est installé entre le dispositif d'entreposage destiné à se vider, et un appareil de transport de produits d'agriculture en position sensiblement horizontale. Il est remarquable en ce qu'il comprend deux bandes tendres et déformables présentant chacune à l'entrée du dispositif une vitesse sensiblement horizontale, et à la sortie du dispositif une vitesse sensiblement verticale, et une forme sensiblement en quart de couronne entre les deux.

En particulier, chaque bande tendre est attachée à une chaîne mécanique déformable. Celle-ci est entraînée par un tourteau à axe sensiblement horizontal au niveau de la sortie du dispositif, maintenue par un tourteau de renvoi à axe sensiblement vertical au niveau de l'entrée du dispositif, et au moins le brin attaché à la partie active de la bande guidé sur un rail fixe en forme de quart de cercle entre les deux tourteaux précités. Selon un mode de réalisation préféré du mode plus évolué précité du dispositif de l'invention, le moyen d'attache de chaque bande tendre à la chaîne mécanique correspondante est constitué d'un ensemble de plats soudés à la chaîne mécanique, et d'une bande déformable dure rendue adhérente à la bande tendre, les plats étant fixés à la bande dure précitée par des moyens de fixation, notamment de type boulon ou rivet. La présente invention concerne également le dispositif du type précité destiné à être installé dans une installation de manutention de produits d'agriculture entre un appareil de transport de produits d'agriculture en position sensiblement verticale et un appareil de transport de produits d'agriculture en position sensiblement horizontale, et qui possède les mêmes caractéristiques que ci-dessus.

La présente invention concerne encore une machine de récolte de légumes, en particulier de poireaux, comprenant un dispositif d'arrachage et un dispositif d'entreposage selon l'invention tel que décrite ci avant.

La présente invention concerne enfin un procédé d'entreposage desdits produits d'agriculture, comprenant les étapes suivantes : fixation d'un premier support vide, comprenant un moyeu, mobile en rotation autour d'un axe, sur un châssis mobile attaché à un véhicule tracteur ; fixation d'un deuxième support, mobile en rotation, comprenant une bande d'entreposage enroulée autour d'un moyeu, sur un châssis fixe attaché audit véhicule tracteur ; fixation d'une extrémité de ladite bande au moyeu du premier support ; démarrage d'un dispositif d'arrachage ; mise en rotation du premier support avant l'arrivée des premiers produits d'agriculture à la sortie du dispositif d'arrachage ; et remplissage du premier support par enroulement de la bande autour de son moyeu et entreposage des produits d'agriculture entre deux couches successives de ladite bande.

Selon un mode de réalisation préféré du procédé de l'invention, le premier support est détaché du véhicule tracteur après l'étape de remplissage, il est mis dans une position dans laquelle son axe de rotation est horizontal, il est déroulé, en vue d'alimenter un procédé aval, et la bande vide est enroulée sur un deuxième support. Ce mode de réalisation permet de mettre à profit pleinement l'entreposage par enroulement en comparaison d'un entreposage en conteneur. En effet, il rend possible une mise à disposition ordonnée et automatique des produits d'agriculture pour un procédé aval. Selon un mode de réalisation particulièrement préféré du procédé de l'invention, après l'étape de remplissage le premier support est détaché du véhicule tracteur, il est maintenu dans sa position à axe de rotation vertical. Il est ultérieurement déroulé, en vue d'alimenter un procédé aval, en utilisant un dispositif de mise à plat contrôlé selon l'invention. Ce mode de réalisation permet également une mise à disposition ordonnée et automatique des produits d'agriculture pour un procédé aval. Il présente en plus l'avantage de permettre un bien plus grande souplesse d'implantation, le premier support à vider pouvant se trouver de n'importe quel côté de la bande aval, et dans une orientation quelconque, alors que dans le cas de l'axe horizontal, il doit obligatoirement se trouver dans l'alignement de la bande aval.

Selon un mode de réalisation toujours préféré du procédé de l'invention, un dispositif à cliquet est enclenché sur le premier support pendant l'étape d'enroulement et déclenché pendant l'étape de déroulement. Ce mode de réalisation permet d'éviter tout risque de perte de produits en cours de transport par exemple.

Selon un mode de réalisation encore préféré du procédé de l'invention, les produits d'agriculture sortant du dispositif d'arrachage sont repris directement par la bande d'entreposage, sans appareil motorisé intermédiaire. De cette manière, on répond au souci constant de simplification des dispositifs, en évitant d'ajouter des appareils motorisés. Par exemple pour un dispositif dont le premier support est à axe de rotation horizontal, on disposera la bande d'entreposage directement sous la sortie des produits du dispositif d'arrachage, évitant ainsi l'emploi d'une bande supplémentaire.

Selon un mode de réalisation avantageux du procédé de l'invention, la mise en rotation du deuxième support en vue de son déroulement est obtenue par la traction sur la bande produite par l'enroulement sur le premier support, et la rotation du deuxième support est contrôlée à l'aide d'un frein disposé sur ce deuxième support. Là encore, ce mode de réalisation permet de faire l'économie d'un moteur supplémentaire.

Selon un mode de réalisation tout particulièrement avantageux du procédé de l'invention, on place l'axe de rotation du premier support sensiblement verticalement. Ce mode de réalisation donne accès à tous les avantages cités plus haut, et liés aux dispositifs dont le premier support présente un axe de rotation vertical.

Selon un mode de réalisation encore avantageux du procédé de l'invention, ledit châssis mobile s'écarte de la sortie du dispositif d'arrachage au fur et à mesure de l'enroulement de la bande autour du moyeu du premier support, de sorte que la couche en cours d'enroulement se trouve toujours à proximité de la sortie du dispositif d'arrachage Cette disposition permet un passage harmonieux des produits du dispositif d'arrachage vers le dispositif d'entreposage.

Selon un mode de réalisation encore bien avantageux du procédé de l'invention, le mouvement d'écartement du châssis mobile est actionné par un vérin hydraulique et contrôlé à l'aide d'un capteur détectant la position de la couche en cours d'enroulement par rapport à la sortie du dispositif d'arrachage. Cela permet de contrôler le plus finement possible le mouvement dudit châssis mobile, et de trouver les conditions idéales de transfert des produits.

Selon un autre mode de réalisation avantageux du procédé de l'invention, le mouvement d'écartement du châssis mobile est actionné par un moyen de poussée situé à proximité du rouleau de renvoi de la bande d'entreposage le plus proche du premier support, et qui s'appuie sur la couche venant de s'enrouler sur le premier support, et contrôlé par la tension de la bande créée à l'aide d'un frein disposé sur le deuxième support. Ce mode de réalisation répond au souci de simplification du dispositif, et fait l'économie d'un vérin, d'un capteur et d'une régulation hydraulique.

### BRÈVE DESCRIPTION DES DESSINS

L'invention sera mieux comprise en regard de la description détaillée ci-après, de quelques modes de réalisation exemplaires du dispositif selon l'invention appuyée sur les dessins correspondants. A cet égard,
La fig. 1 représente en vue de dessus un premier mode de réalisation d'un dispositif d'entreposage selon l'invention avec un véhicule tracteur et un dispositif d'arrachage.
La fig. 2 représente le dispositif de la fig. 1 en vue de côté.
La fig. 3 représente en vue de dessus une vue agrandie de la zone de transfert des produits d'agriculture du dispositif d'arrachage vers un dispositif d'entreposage selon l'invention.
Les fig. 4 à 7 représentent chacune quatre alternatives d'un dispositif selon l'invention dans une vue similaire à la fig. 3.

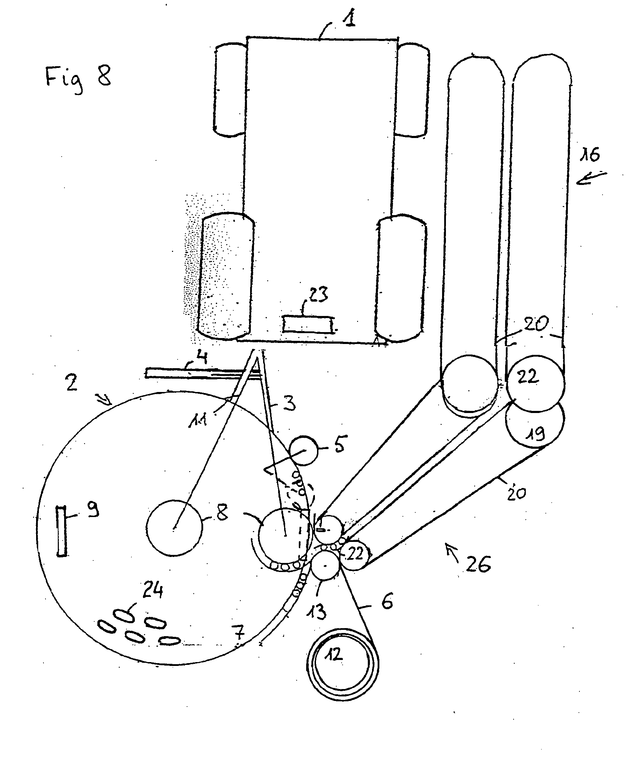

La fig. 8 représente en vue de dessus un deuxième mode de réalisation d'un dispositif selon l'invention en situation de remplissage, avec un véhicule tracteur et un dispositif d'arrachage.
La fig. 9 représente une vue en perspective du dispositif de la fig. 8.
La fig. 10 représente une vue en détail agrandi d'un élément essentiel du dispositif de la fig. 8.
La fig. 11 représente en vue de dessus un troisième mode de réalisation d'un dispositif selon l'invention en situation de remplissage, avec un véhicule tracteur et un dispositif d'arrachage.
La fig. 12 représente en vue de dessus un quatrième mode de réalisation d'un dispositif selon l'invention à deux sens de travail en situation de remplissage, avec un véhicule tracteur et un dispositif d'arrachage.
La fig. 13 représente une vue en perspective du dispositif de la fig. 1 en situation de vidage vers un appareil aval.
La fig. 14 représente en vue en perspective un élément essentiel du dispositif de la fig. 13
Les fig. 15 et 16 représentent une vue en détail agrandi de dessus, respectivement de côté, d'un élément essentiel du dispositif.

### DESCRIPTION

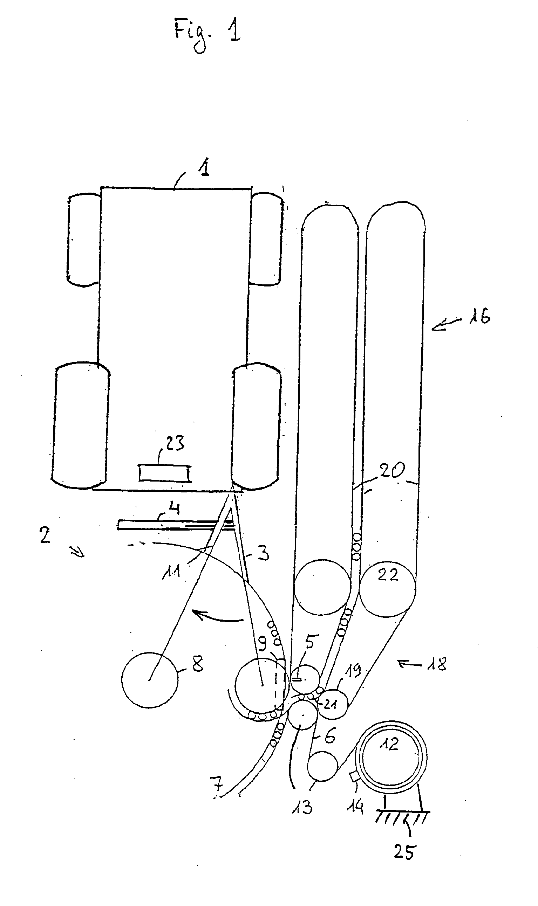

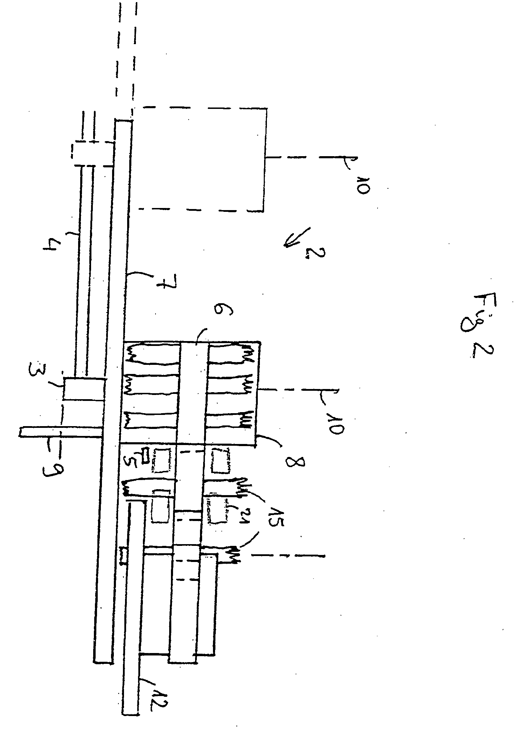

Les fig. 1 et 2 représentent un véhicule tracteur 1 muni d'un premier mode de réalisation de dispositif d'entreposage temporaire de poireaux 2 selon l'invention, et d'un dispositif d'arrachage de poireaux 16, par exemple conforme à BE2002/000508.

Le dispositif d'entreposage 2 comprend un châssis 3, mobile par rapport au véhicule tracteur 1. Sur ce châssis est disposé un premier support 7, pour l'enroulement d'une bande d'entreposage 6 pleine, en rotation autour d'un axe vertical 10. Un deuxième support 12 pour l'enroulement de la bande d'entreposage 6 vide, et des rouleaux de renvoi 13 sont disposés fixes par rapport au véhicule tracteur 1.

Le remplissage s'effectue par mise en rotation du premier support 7, lequel entraîne la bande d'entreposage 6 par enroulement, ainsi que les poireaux 15 qui arrivent à la sortie du dispositif d'arrachage 16. Ils sont maintenus entre la bande 6 et un moyeu 8 du premier support 7 pour le premier tour, puis entre la bande 6 en train de s'enrouler et la bande 6 de la spire précédente qui a pris place autour du moyeu 8. De cette manière les poireaux 15 sont entreposés maintenus entre deux parties de bandes, en spirale sur le premier support 7.

Le mouvement du châssis 3 par rapport au véhicule tracteur 1 est obtenu par un vérin hydraulique 4 alimenté par un dispositif 23 annexe du véhicule tracteur. Il est contrôlé à l'aide d'un ensemble de distributeurs hydrauliques et d'un capteur 5 fixe par rapport au véhicule tracteur 1, et détectant la présence de poireaux 15 sur le premier support 7 à proximité de la sortie du dispositif d'arrachage 16. Le premier support 7 est ainsi dans une position initiale telle que son moyeu 8 est situé près de la sortie du dispositif d'arrachage 16. Il est écarté de sa position initiale sur un angle α dans le sens de la flèche au fur et à mesure de son remplissage. De cette façon la couche externe de poireaux 15 sur le support en cours de remplissage est toujours située près de la sortie du dispositif d'arrachage 16. Le maximum atteint par l'angle α correspond à une distance parcourue du moyeu 8 du premier support 7 correspondant sensiblement à un rayon dudit support, typiquement de l'ordre d'un mètre.

En alternative à un système avec capteur, on peut aussi prévoir un moyen disposé au-dessus ou en dessous du rouleau de renvoi d'extrémité 19 le plus proche du premier support 7, de sorte que le premier support 7 est automatiquement repoussé au fur et à mesure qu'il se remplit. La tension de la bande entre les premier et deuxième support grâce au frein 14 garantit que le premier support 7 ne s'éloigne pas trop des deux rouleaux de renvoi 13, 19. Ledit moyen de poussée peut être un cylindre libre en rotation autour d'un axe vertical. Pour éviter qu'il ne s'appuie sur les poireaux de la couche précédente, on peut prévoir que la bande d'entreposage est plus large ou légèrement décalée en hauteur par rapport aux bandes du dispositif d'arrachage. Ledit cylindre peut alors s'appuyer directement sur la bande d'entreposage de la couche précédente, sans risquer d'endommager les poireaux entreposés.

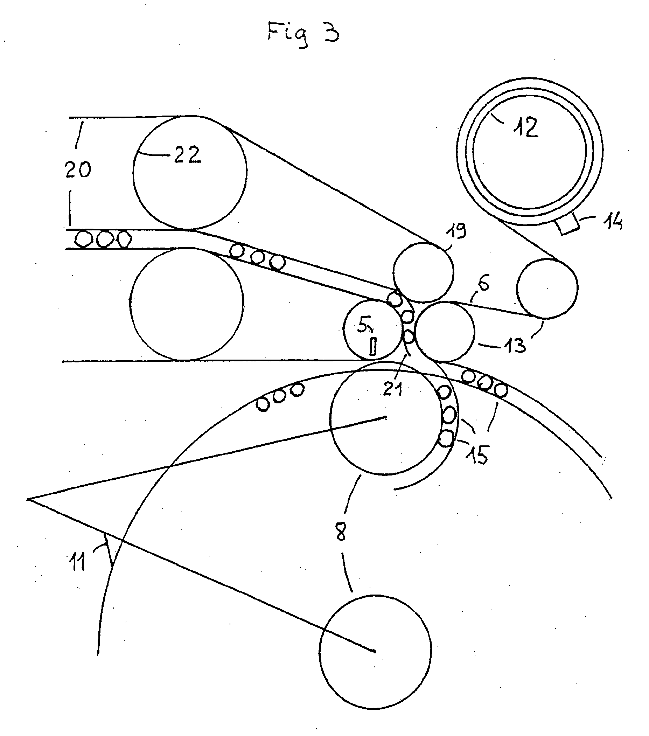

Les rouleaux de renvoi 13 sont disposés de manière à approcher la bande d'entreposage 6 le plus près possible de la sortie du dispositif d'arrachage 16. De plus, le dispositif d'arrachage 16 comprend à sa sortie une partie 18 en fuseau avec des rouleaux de renvoi d'extrémité 19 de diamètre réduit. Ces rouleaux de renvoi d'extrémité sont par exemple disposés comme indiqué à la fig. 3.

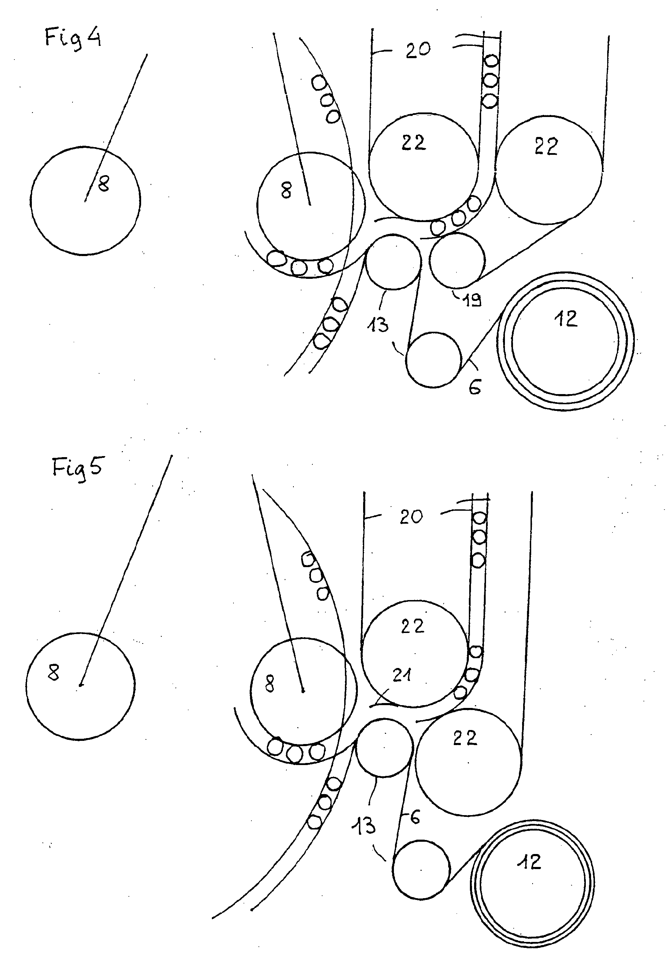

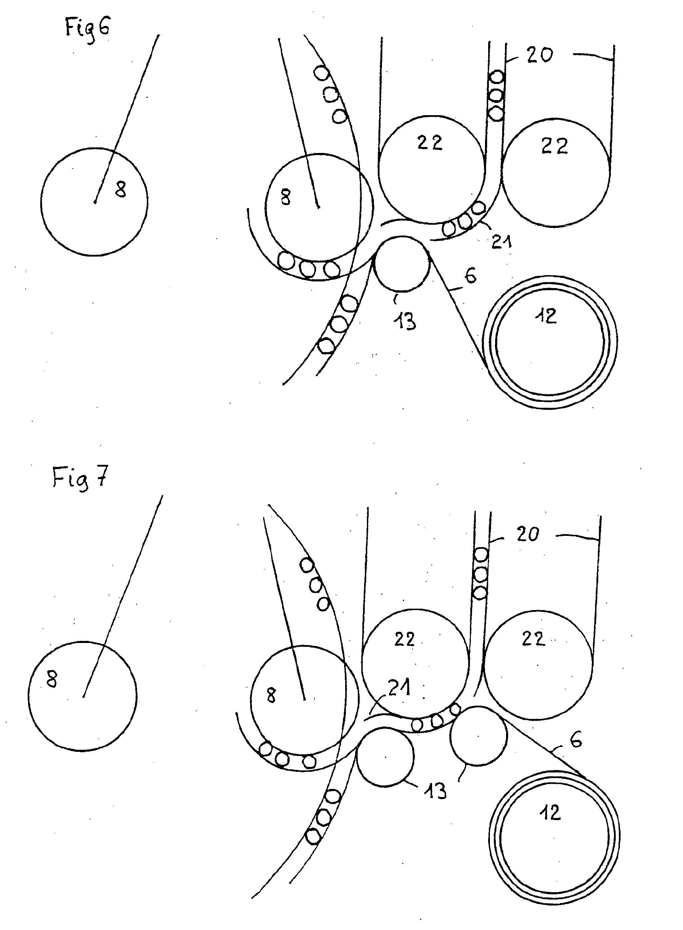

Les fig. 4 à 7 montrent des alternatives permettant de réduire le nombre de composants. La solution de la fig. 4 n'a qu'un rouleau de renvoi d'extrémité, celle de la fig. 5 n'en a aucun. Quant à la solution des fig. 6 et 7, elles permettent chacune d'utiliser un dispositif d'arrachage standard, sans adaptation. De plus, dans le cas de la fig. 6, le nombre de rouleaux de renvoi pour la bande d'entreposage est réduit à un seul, au prix d'une lacune plus grande à combler.

Des guides 21 peuvent être disposés sur les rouleaux de renvoi d'extrémité 19 - respectivement tambours moteur 22 selon les alternatives - au-dessus et/ou en dessous des bandes de maintien 20, prolongeant ainsi la trajectoire des poireaux, et leur évitant ainsi de s'écarter de la bande de maintien ou de la bande d'entreposage respectivement.

La bande d'entreposage 6 prend le relais de la partie aval 17 du dispositif d'arrachage 16. Par son côté intérieur, il prend le relais de la première des bandes de maintien 20 du dispositif d'arrachage 16, la lacune étant couverte par les guides 21. Par le côté extérieur de sa couche précédente sur le support 7, il prend le relais de la deuxième bande de maintien 20 du dispositif d'arrachage 16, la lacune étant couverte par les guides 21. De cette manière, les poireaux sont maintenus à tout moment, et le risque de chute d'un poireau ou d'un bourrage au transfert est réduit au minimum.

Le deuxième support 12, pour la bande 6 vide, est disposé de sorte à ce que la bande 6 n'interfère pas avec le dispositif d'arrachage 16. Il est situé dans un plan différent du premier support 7 pour permettre au premier support 7 de s'approcher de la sortie du dispositif d'arrachage 16 (voir fig. 2). Il est disposé sur un châssis 25, fixe par rapport au véhicule tracteur 1.

La rotation du premier support 7 est obtenue par une roue d'entraînement 9, agissant par frottement sous le plancher dudit support 7, et contrôlée par celle-ci. Cette roue d'entraînement est placée près de la sortie du dispositif d'arrachage 16. Elle se trouve donc à tout instant sous la spire de la bande d'entreposage 6 en train de s'enrouler. Sa vitesse tangentielle imprime donc une vitesse de rotation au support 7, vitesse qui peut être choisie pour que la vitesse linéaire d'enroulement soit égale à la vitesse d'avancée des poireaux 15 à la sortie du dispositif d'arrachage 16. De cette manière, la vitesse des poireaux est toujours la même entre la sortie du dispositif d'arrachage 16 et l'entrée dans le dispositif d'entreposage 2, quel que soit le diamètre d'enroulement en cours sur le support 7. On comprendra là encore l'avantage de cette solution pour réduire au minimum les risques de dysfonctionnement du dispositif.

Ladite roue d'entraînement 9 est actionnée par le même moteur hydraulique 23 que celui qui actionne les deux tambours moteurs 22 des bandes de transport 20 du dispositif d'arrachage 16, par un branchement en série des trois pièces mobiles. De cette manière, leur vitesse de rotation est identique. Son diamètre est également identique à celui de ces deux tambours 22. Ainsi, elle présente une vitesse tangentielle sensiblement égale à la vitesse tangentielle des tambours 22, et donc à la vitesse d'avancement des légumes 15 sur la partie aval du dispositif d'arrachage 16.

Cela garantit un transfert en douceur d'un dispositif à l'autre tout en restant d'une réalisation très simple, en évitant des contrôles électroniques qui sont d'une part onéreux, d'autre part susceptibles de pannes dans l'environnement souvent poussiéreux ou boueux où se trouve le dispositif au moment d'une récolte.

Les fig.s 8 et 9 illustrent un autre mode de réalisation, dans lequel un dispositif de transfert 26 assure la liaison entre le dispositif d'arrachage 16 et l'entreposage par la bande 6 sur le support 7.

Dans ce mode de réalisation, la bande d'entreposage 6 prend le relais de la partie aval du dispositif de transfert 26. Par son côté intérieur, il prend le relais de la première des bandes de maintien 20 du dispositif de transfert 26. Par le côté extérieur de sa couche précédente sur le support 7, il prend le relais de la deuxième bande de maintien 20 du dispositif de transfert 26. De cette manière, les poireaux 15 sont maintenus à tout moment, et le risque de chute d'un poireau ou d'un bourrage au transfert est réduit au minimum.

La rotation du premier support 7 est obtenue et contrôlée par une roue d'entraînement 9, agissant par frottement sur le plancher dudit support 7. Cette roue d'entraînement est placée sensiblement au point symétrique de la sortie du dispositif de transfert 26 par rapport à l'axe de rotation 10 du premier support 7. Cette position de la roue d'entraînement 9 peut s'appliquer également dans les autres modes de réalisation, et inversement la position décrite dans d'autres modes de réalisation fonctionnerait également dans le présent mode de réalisation. Ladite roue d'entraînement 9 se trouve donc à tout instant à proximité de la spire de la bande d'entreposage 6 entrain de s'enrouler. Sa vitesse tangentielle imprime donc une vitesse de rotation au support 7, vitesse qui peut être choisie pour que la vitesse linéaire d'enroulement soit égale à la vitesse d'avancée des poireaux 15 à la sortie du dispositif d'arrachage 16. De cette manière, la vitesse des poireaux est toujours la même entre la sortie du dispositif d'arrachage 16 et l'entrée dans le dispositif d'entreposage 2 quel que soit le diamètre d'enroulement en cours sur le support 7. Cela montre là encore l'avantage de cette solution pour réduire les risques de dysfonctionnement du dispositif au minimum.

La bande d'entreposage 6 peut avoir une largeur de bande d'environ 10 cm. En général, les bandes de transport ou de transfert ont une largeur de bande de cet ordre. Mais pour assurer un maintien optimal depuis la récolte, jusqu'au traitement des poireaux 15 dans un appareil aval, tel qu'une laveuse, on donne à la bande d'entreposage 6 une largeur de bande sensiblement supérieure, avantageusement de l'ordre de la longueur du légume à véhiculer, en l'occurrence des poireaux, et typiquement de l'ordre de 40 à 50 cm. Ainsi, les poireaux 15 sont maintenus sur toute leur longueur, et ne subissent aucun dommage pendant la suite de la récolte jusqu'au remplissage du dispositif, le transport jusqu'à la ferme, le stockage en chambre froide, le déstockage ou encore la mise en place sur une installation aval. Toutes ces opérations peuvent s'étendre parfois sur plusieurs semaines, jusque 6 semaines, ce qui n'était pas possible avec les dispositifs de conditionnement de l'état de la technique avec lesquels les produits d'agriculture risquaient de pourrir bien avant.

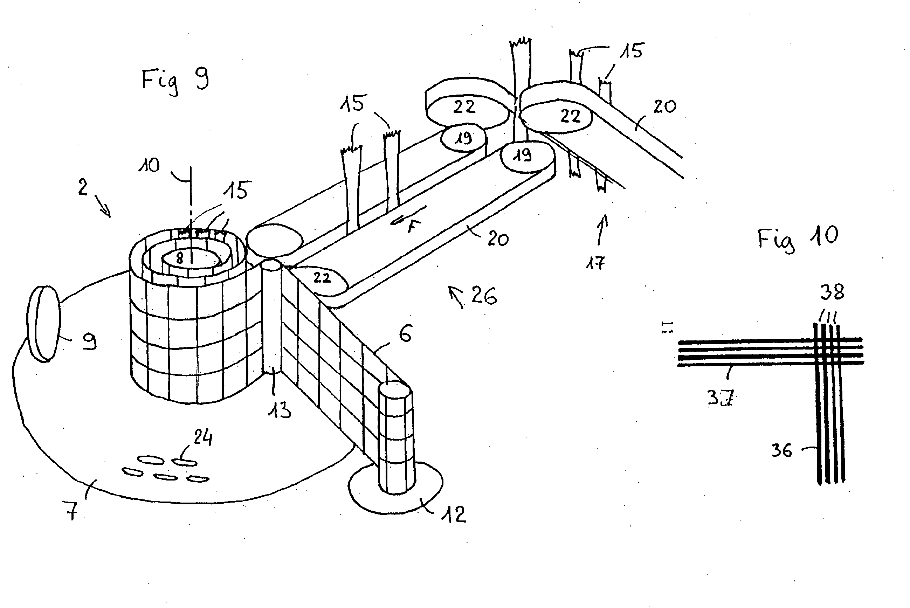

De plus, pour permettre aux poireaux 15 de respirer pendant toutes ces opérations, et éviter de les étouffer dans la bande d'entreposage 6, ladite bande est constituée d'une toile en tissu de polymère, par exemple un mélange avec du polyéthylène, réunissant les propriétés suivantes. Elle est résistante tout en étant défroissable, de façon à éliminer tout pli pouvant se former en cours de processus. En plus, elle est poreuse avec des espaces entre les chaînes 36 et trames 37 du tissage, de sorte que ledit tissu ne soit pas étanche. Les chaînes et trames de tissage présentent typiquement une largeur de 2 mm, et un espace 38 d'environ 1 mm est laissé entre deux chaînes ou trames (voir fig. 10). En outre, la toile est aisément réparable au cas où un trou s'y formerait par suite de manipulations ou sollicitations permanentes, par exemple par application d'une rustine ou analogue, ce qui n'est pas faisable avec les bandes existantes. Une telle bande permet une conservation bien meilleure des poireaux que les bandes de l'état de la technique.

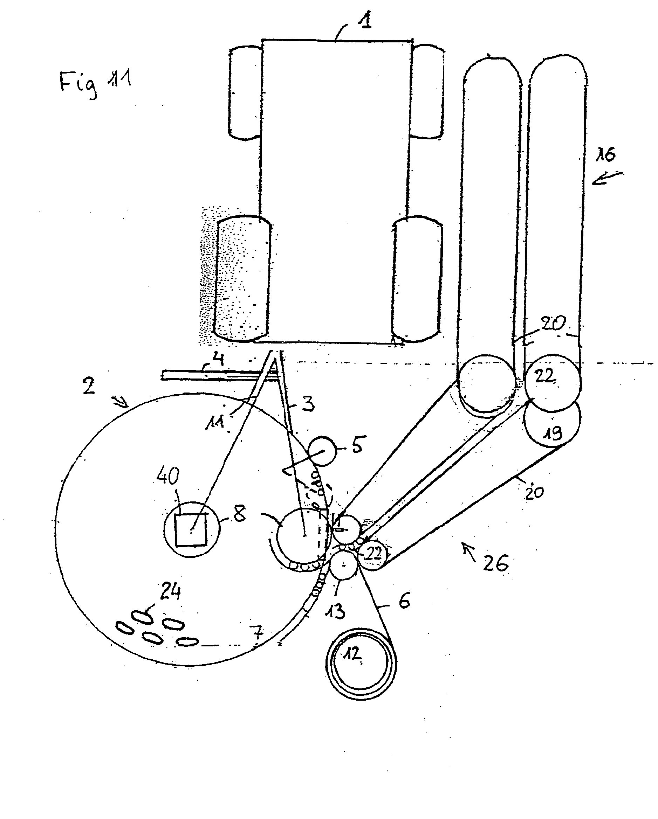

La fig. 11 illustre un troisième mode de réalisation de l'invention, dans lequel un motoréducteur est monté directement sur le moyeu du support 7, en vue de le mettre en rotation.

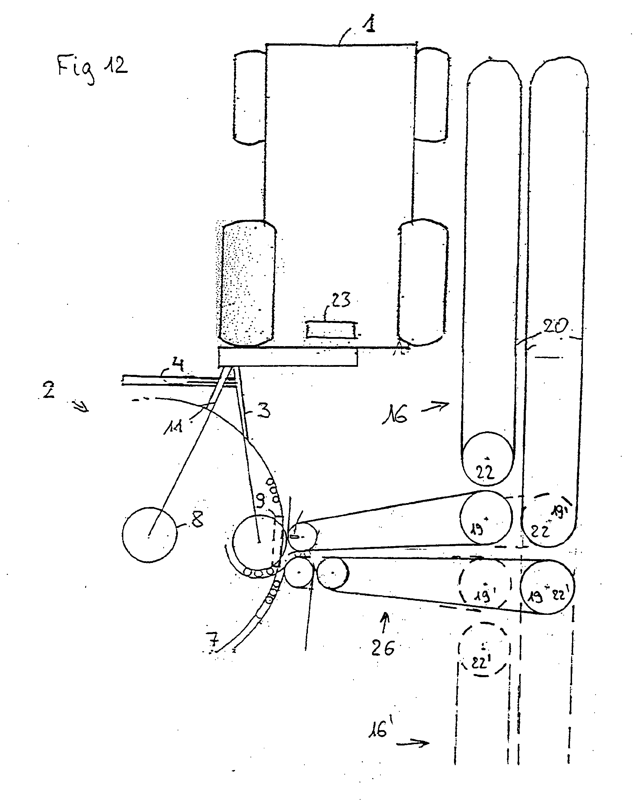

La fig. 12 illustre un quatrième mode de réalisation, à deux sens de travail dans lequel, lorsque le véhicule tracteur arrive en bout de ligne, il n'a pas besoin d'effectuer un demi tour. En effet, il peut faire pivoter le dispositif d'arrachage 16 de 180°, et se limiter à se décaler vers la ligne suivante, et la récolte peut continuer. Le dispositif de transfert 26 continue ainsi à transférer les poireaux 15 du dispositif d'arrachage 16 vers le dispositif d'entreposage 2. Il est dans ce cas disposé perpendiculairement à la direction des poireaux dans le dispositif d'arrachage 16. Par ailleurs, il faut assurer le bon positionnement des rouleaux d'entrée 19 du dispositif de transfert 26 par rapport aux tambours moteurs du dispositif d'arrachage 16. Par exemple les deux rouleaux d'entrée 19 du dispositif de transfert 26 sont mobiles en translation dans la direction dudit dispositif de transfert, pour permettre à la bande 20 faisant face aux poireaux 15 arrivant par le dispositif d'arrachage 16 d'être plus longue que l'autre bande, qui est ainsi en retrait pour laisser arriver les poireaux. Après une rotation de 180° du dispositif d'arrachage, l'un desdits rouleaux est déplacé en translation de 19 à 19' de façon que la bande qui était en retrait soit maintenant débordante. Il s'ensuit que c'est la bande qui était débordante (rouleau déplacé de 19' vers 19) qui est maintenant en retrait. Dans le même temps, les tambours moteurs 22 du dispositif d'arrachage 16 sont également déplacés en translation (de 22 vers 22') pour permettre leur positionnement adapté aux rouleaux 19'. Il résulte de ce mode de réalisation un gain de temps en manoeuvre tout en permettant une fluidité renforcée du processus.

Un cliquet 11 est avantageusement disposé à la périphérie du premier support 7. Ceci permet d'éviter un vidage intempestif du dispositif d'entreposage 2, par exemple lors d'un arrêt en plein champ, ou lors du trajet de retour des champs.

Le deuxième support 12 se vide au fur et à mesure que le premier support 7 se remplit, par traction sur la bande 6 occasionnée par la rotation du premier support 7. Un frein 14 est disposé sur le deuxième support 12, pour éviter qu'il ne se mette à tourner trop rapidement auquel cas la bande ne serait plus contrôlée.

Une fois de retour à la ferme, on peut disposer le support 7 plein, ou partiellement plein dans une chambre froide. Plusieurs supports 7 peuvent ainsi être superposés dans une même chambre. Des perçages 24 disposés dans le plancher du support 7 permettent à l'air de circuler dans la chambre, et ainsi au froid de se propager à tous les poireaux 15. Cela représente un avantage important de la solution des spires à axe vertical. En effet, les poireaux 15 sont dans une position verticale, et présentent des interstices entre eux permettant à l'air de passer de bas en haut, par l'effet naturel de convection pour peu que la chaleur soit évacuée par le haut. Avec les spires à axe horizontal, l'air ne peut pas circuler verticalement à travers la bobine. Or c'est le mouvement ascendant de l'air qui peut facilement être provoqué par simple différence de température. S'il fallait produire des mouvements horizontaux, cela nécessiterait des ventilateurs ou des mécanismes équivalents.

Ultérieurement, le premier support 7 va être vidé par déroulement, après l'avoir tourné pour qu'il soit à axe horizontal, et après avoir débrayé le cliquet 11. Ainsi il se déroule de manière que les poireaux 15 se retrouvent couchés sur la bande 6 déroulée. Celle-ci peut alors alimenter un appareil 29 tel qu'une laveuse, ou tout autre dispositif utile.

La bande 6 vide est alors enroulée sur le deuxième support 12 raccordé pour cette opération à un dispositif motorisé adéquat, pour être prête à servir à un nouveau remplissage d'un dispositif selon l'invention.

Selon un autre mode de réalisation, le premier support 7 va être vidé par déroulement, après avoir débrayé le cliquet 11, son axe restant vertical. On peut alors alimenter un appareil aval 29, tel qu'une laveuse, voire tout autre dispositif utile. La position verticale de l'axe permet de donner une grande souplesse d'implantation, le dispositif d'entreposage pouvant être positionnée de n'importe quel côté de la bande d'entrée 28 de la laveuse, dans l'alignement ou non, alors qu'avec un axe horizontal, il faut impérativement se placer dans l'alignement parfait de ladite bande d'entrée.

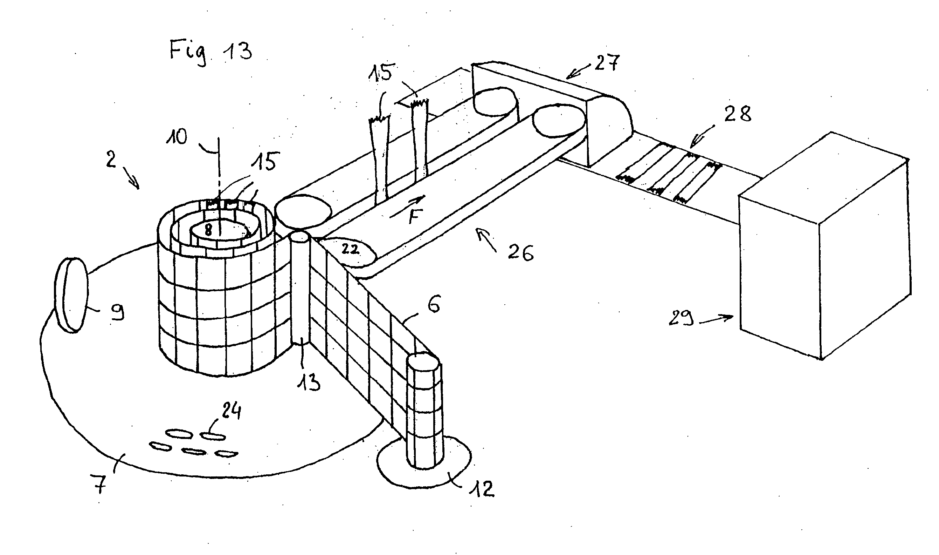

La fig. 13 illustre une telle disposition d'alimentation d'un appareil aval. Un dispositif de transfert 26 est disposé contre le dispositif de conditionnement 2 d'une manière analogue au dispositif de transfert 26 disposé pour le remplissage du dispositif de conditionnement 2, le sens de marche étant opposé, comme indiqué par la flèche F. Un dispositif tel qu'une bande 28 réceptionne les poireaux 15 en position horizontale, et permet d'alimenter l'appareil en aval 29. Un dispositif 27 de mise à plat contrôlée est disposé entre le dispositif de transfert 26 et la bande 28, et permet d'assurer une alimentation contrôlée et régulière de la bande 28.

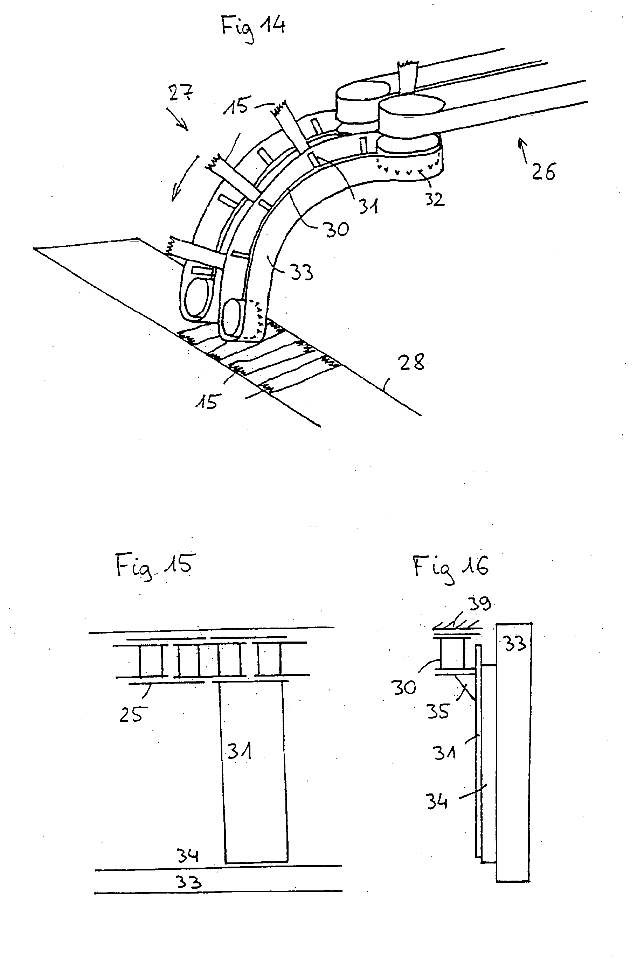

La fig. 14 représente une vue détaillée du dispositif de mise à plat contrôlée. Deux chaînes mécaniques 30 sont rendues solidaires de deux bandes 33 déformables et tendres. Cela est réalisé par l'intermédiaire de plats 31 soudés aux chaînes mécaniques par une soudure 35, et fixés à des bandes intermédiaires dures 34, elles-mêmes collées aux bandes tendres 33 (voir fig.s 15 et 16). Chaque chaîne mécanique 30 est une chaîne mécanique souple, guidée par deux tourteaux 32, l'un horizontal à l'entrée du dispositif, l'autre vertical à la sortie, et par deux rails fixes 39, lui imprimant une forme courbe, avantageusement en quart de cercle entre ces deux tourteaux 32. Le brin retour de la chaîne mécanique peut être guidé de la même manière que le brin aller, pour lui donner ladite forme de quart de cercle présentant un rayon compris entre 30 et 40 cm par exemple 35 cm environ. Cependant, on peut également prévoir un guidage différent pour le brin retour, assurant seulement le bon engrainement sur les tourteaux. Les bandes 33 présentent ainsi chacune une forme de quart de couronne entre l'entrée du dispositif et sa sortie, du moins par son côté actif, en contact avec les poireaux 15, et un enroulement autour d'une poulie plate à chaque extrémité du dispositif, laquelle poulie tourne autour du même axe de rotation que chacun des tourteaux.

Une solution dans laquelle les bandes 33 présentent une forme du même type - quart de couronne, suivi d'un enroulement autour d'une poulie plate, ou équivalent, à chaque extrémité - fait bien entendu partie de la présente invention, ainsi d'ailleurs que d'autres formes courbées, notamment ellipsoïdale ou ovale. Dans ce cas, le grand axe de celle-ci serait agencé de préférence dans le prolongement de l'alimentation pour réduire ainsi la hauteur de chute des poireaux vers l'appareil aval 28, 29, tout en bénéficiant d'un passage plus progressif de la position verticale vers l'horizontale dans la phase initiale du transfert 27. Il est important ici que la tangente au point d'amorce du dispositif de mise à plat se situe dans le même plan que les bandes de transfert 26, tandis que l'axe orthogonal d'extrémité des bandes tendres 33 est sensiblement parallèle à l'axe transversal de la bande de réception 28, en ne laissant qu'une faible distance de l'ordre de quelques cm entre lesdites extrémités et la bande de réception 28. Ceci permet ainsi une pose en douceur du poireau sur celle-ci 28, dans le creux allongé avantageusement prévu à cet effet. On peut par exemple entraîner directement la bande 33 par les poulies plates, et les guider pour leur donner la forme de quart de couronne d'une autre manière, par exemple en faisant rouler le champ de la bande sur des rouleaux disposés en quart de cercle.

Les bandes 33 sont réalisées dans un matériau tendre et souple présentant une certaine élasticité, qui grâce à une bonne déformabilité élastique, exerce une légère pression sur le poireau passant. Ceci permet ainsi une bonne tenue de celui-ci pendant son passage, même en phase inclinée à un stade avancé dans le dispositif de mise à plat contrôlée 27. En effet, pour assurer un maintien parfait des poireaux 15 entre les deux bandes 33, il faut les disposer proches l'une de l'autre, suffisamment pour assurer le maintien du plus petit poireau. Les poireaux plus gros doivent néanmoins pourvoir passer dans le dispositif sans être endommagés pour autant. Il faut donc que la surface de la bande recule légèrement pour les laisser passer. Le caractère tendre du matériau rend cela possible, et permet à tous les poireaux 15 de passer sans endommagement.

Dans une disposition alternative du dispositif de mise à plat 27 non représentée, les bandes 33 peuvent s'étendre en continuité des bandes du dispositif de transfert 26, ce qui permet d'économiser ainsi un appareil. Dans cette disposition, lesdites bandes 33 sont fixées à des chaînes mécaniques 30 par l'intermédiaire de plats 31 sur toute leur longueur, et les tourteaux amont sont situés à l'entrée du dispositif de transfert 26.

Dans une autre disposition, telle que présentée à la fig. 14, les tourteaux amont des bandes 33 sont de préférence disposés sous les rouleaux de renvoi d'extrémité 19 du dispositif de transfert 26, de manière d'une part à ne pas laisser de parcours sur lequel les poireaux 15 ne seraient plus guidés entre les dispositifs 26 et 27, d'autre part à ce que la plus petite partie des poireaux seulement se retrouve à l'intérieur du quart de cercle formé par les bandes 33, et la plus grande partie à l'extérieur de ce quart de cercle. Ainsi, dans le cas où les chaînes mécaniques 30 sont animées de la même vitesse que les bandes du dispositif de transfert 26, les parties non visibles à la fig. 14 des poireaux se rapprochent légèrement, alors que les parties visibles s'éloignent fortement l'une de l'autre. Ceci permet d'éviter un engorgement de poireaux 15 sous les bandes 33, et de bien singulariser les poireaux le long de leur parcours dans le dispositif de mise à plat contrôlé en les séparant l'un de l'autre pour les individualiser. Ceci permet ainsi d'obtenir une répartition des poireaux 15 parfaitement régulière sur le tapis 28, sans que ceux-ci ne s'entremêlent.

Dans le but de renforcer encore cet avantage, la commande de vitesse des tourteaux 32 est réglable, de façon à rendre possible ainsi la vitesse des chaînes mécaniques 30 supérieure à la vitesse des bandes du dispositif de transfert 26. On peut ainsi régler la machine de telle sorte que les poireaux s'éloignent l'un de l'autre sur toute leur longueur, et fixer la vitesse des tourteaux 32 à la valeur juste suffisante pour obtenir une répartition parfaite de poireaux sur le tapis 28.

Le dispositif de mise à plat contrôlé peut par ailleurs être utilisé dans d'autres circonstances, comme par exemple entre un dispositif d'arrachage 16 et un dispositif d'entreposage alimenté par une bande à plat, ou encore dans d'autres types d'application.

## Revendications

1. Dispositif d'entreposage automatique (2) de produits d'agriculture (15), en particulier des légumes du type allongé et souple tels que des poireaux, destiné pour son remplissage à être installé sur un véhicule tracteur (1), et à coopérer avec un dispositif d'arrachage (16), **caractérisé en ce qu'**il comprend au moins une bande d'entreposage (6) et un premier support (7) comprenant un moyeu (8), mobile en rotation autour d'un axe (10), agencé pour l'enroulement de ladite bande d'entreposage (6) d'une part, et l'entreposage desdits produits d'agriculture entre deux couches successives de ladite bande (6), d'autre part.

2. Dispositif selon la revendication précédente, **caractérisé en ce que** ledit enroulement présente une forme en spirale, et/ou **en ce que** ledit premier support (7) est muni d'un dispositif à cliquet (11), en particulier anti-retour, agencé de façon à empêcher le déroulement de la bande (6), plus particulièrement **en ce qu'**il comprend en outre un deuxième support (12) comprenant un moyeu, mobile en rotation pour entreposer par un enroulement la bande d'entreposage (6) vide, et au moins un rouleau de renvoi (13).

3. Dispositif selon l'une des revendications précédentes, **caractérisé en ce que** le premier support (7) est à axe de rotation (10) sensiblement vertical lorsque le dispositif (2) est installé sur ledit véhicule tracteur (1), en particulier **en ce que** ledit support (7) est disposé sur un châssis (3) mobile par rapport audit véhicule tracteur (1), plus particulièrement **en ce qu'**un vérin (4) hydraulique est disposé entre le véhicule tracteur (1) et ledit châssis mobile (3) en vue de son actionnement, encore plus particulièrement **en ce qu'**au moins un capteur (5) de détection de position est disposé sur un châssis (25) fixe par rapport au véhicule tracteur (1) à proximité du rouleau de renvoi (13) de la bande d'entreposage le plus proche du premier support (7), au moyen duquel ledit vérin hydraulique (4) peut être piloté de manière à positionner ledit support de telle sorte que la couche externe d'enroulement soit située à proximité dudit rouleau de renvoi (13); tout particulièrement dans lequel ledit capteur (5) est relié à un agencement de distributeurs hydrauliques alimentés par le véhicule tracteur (1).

4. Dispositif selon l'une des revendications précédentes, **caractérisé en ce qu'**il comprend un actionneur monté sur ledit moyeu (8) pour l'entraîner en rotation.

5. Dispositif selon l'une des revendications 1 à 3, **caractérisé en ce qu'**il comprend une roue d'entraînement (9) mobile autour d'un axe horizontal sensiblement sécant avec l'axe de rotation du premier support (7), ladite roue d'entraînement étant agencée en rotation de façon qu'elle entraîne la rotation dudit premier support, notamment par frottement, en particulier **en ce que** ladite roue d'entraînement (9) est placée à proximité de l'enroulement en cours de produits d'agriculture, de préférence en une position diamétralement opposée au point d'arrivée des produits d'agriculture (15) par rapport à l'axe de rotation (10) du premier support (7).

6. Dispositif selon l'une des revendications précédentes, **caractérisé en ce que** ledit premier support (7) comprend une base sensiblement en forme de disque, au-dessus duquel les produits d'agriculture (15) sont entreposés, en particulier **en ce que** le dispositif comprend une base, sensiblement en forme de disque, mobile en rotation, et destinée à recevoir ledit premier support (7), de le supporter et de l'entraîner en rotation, ou dans lequel, lorsqu'elle dépend de la revendication 5, ladite roue d'entraînement (9) est placée au-dessus de ladite base, ou en dessous de ladite base du premier support (7), respectivement de ladite base du dispositif supportant ledit premier support (7), ladite roue d'entraînement (9) pouvant alors être attachée audit châssis fixe (25) à proximité du rouleau de renvoi (13) le plus proche du premier support (7) et placée au contact du premier support en dessous de celui-ci, laquelle roue d'entraînement par sa rotation entraîne la rotation dudit support de façon à contrôler sa vitesse linéaire au niveau de l'enroulement en cours, quel que soit le diamètre d'enroulement en cours.

7. Dispositif selon l'une des revendications 5 ou 6, **caractérisé en ce que** ladite roue d'entraînement (9) présente le même diamètre extérieur que les tambours moteurs (22) des bandes de maintien (20) des produits d'agriculture (15) sur la partie aval (17) du dispositif d'arrachage (16), et **en ce que** ladite roue (9) et lesdits tambours (22) sont branchés en série sur un même actionneur (23), permettant ainsi d'obtenir des vitesses de rotations identiques et respectivement une vitesse linéaire d'enroulement similaire à tout instant à la vitesse de sortie des produits d'agriculture (15) du dispositif d'arrachage (16), plus particulièrement dans lequel ledit actionneur est un moteur hydraulique (23).

8. Dispositif selon l'une des revendications précédentes, **caractérisé en ce que** ladite bande d'entreposage (6) présente une largeur telle que les produits d'agriculture (15) précités sont maintenus par ladite bande (6) sur sensiblement toute leur longueur, et/ou **en ce que** ladite bande (6) est constituée d'un tissage en matériau polymère, notamment polyéthylène, les chaînes (36) et les trames (37) étant séparées chacune de la suivante par un espace (38) conférant une perméabilité à ladite bande ; et/ou **en ce que** ledit support (7) présente des ouvertures (24) pour le passage de l'air dans le sens vertical, pour la réfrigération de plusieurs dispositifs d'entreposages (2) remplis superposés dans un réfrigérateur.

9. Dispositif selon l'une des revendications précédentes, **caractérisé en ce qu'**il comprend un dispositif de transfert (26) destiné à reprendre les légumes à la sortie du dispositif d'arrachage (16), et à les transporter jusqu'à l'arrivée au premier support (7), ou **en ce que** le dispositif d'arrachage comprend un prolongement équipé d'au moins un, de préférence deux rouleaux de renvoi d'extrémité (19) de petit diamètre, pour assurer une continuité du maintien des légumes arrachés (15) entre ledit dispositif d'arrachage (16) et ledit dispositif d'entreposage (2).

10. Dispositif selon l'une des revendications précédentes, **caractérisé en ce que** pour son vidage, il est associé à un dispositif de mise à plat contrôlée (27) desdits produits d'agriculture, installé entre ledit dispositif d'entreposage (2) destiné à se vider, et un appareil de transport de produits d'agriculture (28) en position sensiblement horizontale, en particulier dans lequel ledit dispositif de mise à plat contrôlée comprend deux bandes (33) tendres et déformables présentant chacune à l'entrée du dispositif une vitesse sensiblement horizontale, et à la sortie du dispositif une vitesse sensiblement verticale, et une forme sensiblement en quart de couronne entre les deux ; plus particulièrement dans lequel chaque bande (33) tendre est attachée à une chaîne mécanique (30) déformable, laquelle est entraînée par un tourteau (32) à axe sensiblement horizontal au niveau de la sortie du dispositif, maintenue par un tourteau (32) de renvoi à axe sensiblement vertical au niveau de l'entrée du dispositif; et au moins le brin attaché à la partie active de la bande (33) guidé sur un rail fixe (39) en forme de quart de cercle entre les deux tourteaux précité ; encore plus particulièrement dans lequel le moyen d'attache de chaque bande tendre (33) à la chaîne mécanique (30) correspondante est constitué d'un ensemble de plats (31) soudés à la chaîne mécanique, et d'une bande déformable dure (34) rendue adhérente à la bande tendre (33), les plats (31) étant fixés à la bande dure précitée par des moyens de fixation.

11. Dispositif selon l'une des revendications précédentes, **caractérisé en ce qu'**il comprend un dispositif de transfert à un dispositif de mise à plat contrôlé desdits produits d'agriculture d'une position verticale à une position horizontale, qui comprend deux bandes (33) tendres et déformables présentant chacune à l'entrée du dispositif une vitesse sensiblement horizontale, et à la sortie du dispositif une vitesse sensiblement verticale, et une forme sensiblement en quart de couronne entre les deux.

12. Machine de récolte de légumes, en particulier de poireaux, comprenant un dispositif d'arrachage (16) et un dispositif d'entreposage (2) selon l'une des revendications précédentes.

13. Procédé d'entreposage de produits d'agriculture, en particulier des légumes du type allongé et souple tels que des poireaux, en particulier pour la mise en oeuvre d'un dispositif tel que défini dans l'une des revendications précédentes, **caractérisé en ce qu'**il comprend les étapes suivantes :
- fixation d'un premier support (7) vide, comprenant un moyeu (8), mobile en rotation autour d'un axe (10), sur un châssis mobile (3) attaché à un véhicule tracteur (1)
- fixation d'un deuxième support (12), mobile en rotation, comprenant une bande d'entreposage (6) enroulée autour d'un moyeu, sur un châssis fixe (25) attaché audit véhicule tracteur (1)
- fixation d'une extrémité de ladite bande (6) au moyeu (8) du premier support (7)
- démarrage d'un dispositif d'arrachage (16)
- mise en rotation du premier support (7) avant l'arrivée des premiers produits d'agriculture (15) à la sortie du dispositif d'arrachage (16)
- remplissage du premier support (7) par enroulement de la bande (6) autour de son moyeu (8) et entreposage des produits d'agriculture (15) entre deux couches successives de ladite bande (6) ; en particulier **en ce qu'**après l'étape de remplissage
- le premier support (7) est détaché du véhicule tracteur (1)
- il est mis dans une position dans laquelle son axe de rotation (10) est horizontal
- il est déroulé, en vue d'alimenter un procédé aval.

14. Procédé d'entreposage selon la revendication 13, en particulier lorsqu'elle dépend de l'une des revendications 10 ou 11, **caractérisé en ce qu'**après l'étape de remplissage
- le premier support (7) est détaché du véhicule tracteur (1)
- il est maintenu dans une position dans laquelle son axe de rotation (10) est vertical
- il est déroulé, en vue d'alimenter un procédé aval, les produits d'agriculture (15) passant du premier support (7) audit dispositif de mise à plat contrôlé (27).

15. Procédé d'entreposage selon l'une des revendications 13 ou 14, **caractérisé en ce qu'**un dispositif à cliquet (11) est enclenché sur le premier support (7) pendant l'étape d'enroulement et déclenché pendant l'étape de déroulement, **en ce que** la mise en rotation du deuxième support (12) en vue de son déroulement est obtenue par la traction sur la bande (6) produite par l'enroulement sur le premier support (7), et **en ce que** la rotation du deuxième support (12) est contrôlée à l'aide d'un frein (14) disposé sur ce deuxième support (12), en particulier **en ce que** au fur et à mesure de l'enroulement de la bande (6) autour du moyeu (8) du premier support (7), ledit châssis mobile (3) s'écarte de la sortie du dispositif d'arrachage (16) de sorte que la couche en cours d'enroulement se trouve toujours à proximité de la sortie du dispositif d'arrachage (16), plus particulièrement **en ce que** le mouvement d'écartement du châssis mobile (3) est actionné par un vérin hydraulique (4) et contrôlé à l'aide d'un capteur (5) détectant la position de la couche en cours d'enroulement par rapport à la sortie du dispositif d'arrachage (16), encore plus particulièrement **en ce que** le mouvement d'écartement du châssis mobile (3) est actionné par un moyen de poussée situé à proximité du rouleau de renvoi (13) de la bande d'entreposage (6) le plus proche du premier support (7), et qui s'appuie sur la couche venant de s'enrouler sur le premier support (7), et contrôlé par la tension de la bande (6) créée à l'aide d'un frein (14) disposé sur le deuxième support (12).

## Patentansprüche

1. Automatische Lagervorrichtung (2) von landwirtschaftlichen Produkten (15), insbesondere von Gemüse länglicher und biegsamer Art wie Lauch, die dazu bestimmt ist, zu ihrem Füllen auf einem Zugfahrzeug angebracht zu sein (1) und mit einer Vorrichtung zum Herausziehen (16) zusammenzuwirken, **dadurch gekennzeichnet, dass** sie mindestens ein Lagerband (6) und eine erste Auflage (7) aufweist, die eine Nabe (8) aufweist, die drehbar um eine Achse (10) ist, die einerseits zum Wickeln des Lagerbandes (6) und andererseits zum Lagern der landwirtschaftlichen Produkte zwischen zwei aufeinanderfolgenden Schichten des Bandes (6) angeordnet sind.

2. Vorrichtung nach dem vorhergehenden Anspruch, **dadurch gekennzeichnet, dass** die Wicklung die Form einer Spirale aufweist und/oder dass die erste Auflage (7) mit einer Klinkenvorrichtung (11), insbesondere mit Rückschlagklinken, versehen ist, die angeordnet ist, um das Abwickeln des Bandes (6) zu verhindern, insbesondere, dass sie zudem eine zweite Auflage (12) aufweist, die eine Nabe, die drehbar ist, um durch ein Wickeln das leere Lagerband (6) zu lagern, und mindestens eine Umlenkrolle (13) aufweist.

3. Vorrichtung nach einem der vorhergehenden Ansprüche, **dadurch gekennzeichnet, dass** die erste Auflage (7) eine Drehachse (10) aufweist, die im Wesentlichen vertikal ist, wenn die Vorrichtung (2) an dem Zugfahrzeug (1) angebracht ist, wobei insbesondere die Auflage (7) auf einem Gestell (3) angeordnet ist, das gegenüber dem Zugfahrzeug (1) beweglich ist, wobei insbesondere ein Hydraulikzylinder (4) zwischen dem Zugfahrzeug (1) und dem bewegliche Gestell (3) angeordnet ist, um dies zu betätigen, wobei insbesondere mindestens ein Positionserkennungssensor (5) auf einem Gestell (25), das gegenüber dem Zugfahrzeug (1) fest ist, in der Nähe der Umlenkrolle (13) des Lagerbandes möglichst nahe der ersten Auflage (7) angeordnet ist, mittels der der Hydraulikzylinder (4) so gesteuert werden kann, dass die Auflage so angeordnet ist, dass sich die äußere Wickelschicht in der Nähe der Umkehrrolle (13) befindet, wobei insbesondere der Sensor (5) mit einer Anordnung von Hydraulikventilen verbunden ist, die von dem Zugfahrzeug (1) gespeist sind.

4. Vorrichtung nach einem der vorhergehenden Ansprüche, **dadurch gekennzeichnet, dass** sie ein Stellglied aufweist, das an der Nabe (8) angeordnet ist, um sie in Drehung anzutreiben.

5. Vorrichtung nach einem der Ansprüche 1 bis 3, **dadurch gekennzeichnet, dass** sie ein Antriebsrad (9) aufweist, das um eine horizontale Achse beweglich ist, die sich im Wesentlichen mit der Drehachse der ersten Auflage (7) schneidet, wobei das Antriebsrad derart drehbar angeordnet ist, dass es insbesondere durch Reibung die Drehung der ersten Auflage antreibt, wobei insbesondere das Antriebsrad (9) in der Nähe des laufenden Wickelns der landwirtschaftlichen Produkte angeordnet ist, vorzugsweise in einer diametral gegenüberliegenden Position zum Ankunftspunkt der landwirtschaftlichen Produkte (15) gegenüber der Drehachse (10) der ersten Auflage (7).

6. Vorrichtung nach einem der vorhergehenden Ansprüche, **dadurch gekennzeichnet, dass** die erste Auflage (7) eine im Wesentlichen scheibenförmige Basis aufweist, über der die landwirtschaftlichen Produkte (15) gelagert sind, wobei die Vorrichtung insbesondere eine Basis aufweist, die im Wesentlichen scheibenförmig, drehbar und zum Aufnehmen der ersten Auflage (7) bestimmt ist, um diese zu tragen und in Drehung anzutreiben, oder wobei das Antriebsrad (9), wenn es von Anspruch 5 abhängig ist, über der Basis oder unter der Basis der ersten Auflage (7) von jeweils der Basis der Vorrichtung angeordnet ist, die die erste Auflage (7) trägt, wobei das Antriebsrad (9) dann an das feste Gestell (25) in der Nähe der Umlenkrolle (13) befestigt werden kann, die der ersten Auflage (7) am allernächsten liegt, und in Kontakt mit der ersten Auflage unter dieser angeordnet werden kann, wobei das Antriebsrad durch seine Drehung die Drehung der Auflage antreibt, um deren lineare Geschwindigkeit bei dem laufenden Wickeln ungeachtet des Durchmessers des laufenden Wickelns zu steuern.

7. Vorrichtung nach einem der Ansprüche 5 bis 6, **dadurch gekennzeichnet, dass** das Antriebsrad (9) den gleichen Außendurchmesser wie die Motortrommeln (22) der Haltebänder (20) der landwirtschaftlichen Produkte (15) auf dem hinteren Abschnitt (17) der Vorrichtung zum Herausziehen (16) aufweist, und dass das Rad (9) und die Trommeln (22) in Serie mit dem gleichen Stellglied (23) verbunden sind, wodurch auf diese Weise gleiche Drehzahlen und jederzeit jeweils eine ähnliche lineare Wickelgeschwindigkeit wie die Austrittsgeschwindigkeit der landwirtschaftlichen Produkte (15) aus der Vorrichtung zum Herausziehen (16) erhalten werden können, wobei insbesondere das Stellglied ein Hydraulikmotor (23) ist.

8. Vorrichtung nach einem der vorhergehenden Ansprüche, **dadurch gekennzeichnet, dass** das Lagerband (6) eine solche Breite aufweist, dass die oben erwähnten landwirtschaftlichen Produkte (15) von dem Band (6) im Wesentlichen über ihre gesamte Länge gehalten sind, und/oder, dass das Band (6) aus einem Gewebe aus Polymermaterial, insbesondere Polyethylen, erstellt ist, wobei die Kettenfäden (36) und die Schussfäden (37) jeweils durch einen Raum (38) von dem nächsten Ketten- bzw. Schussfaden getrennt sind, der dem Band eine Durchlässigkeit verleiht, und/oder dass die Auflage (7) Öffnungen (24) für den Durchgang von Luft in der vertikalen Richtung zum Kühlen mehrerer Lagervorrichtungen (2) aufweist, die übereinander liegend in einen Kühlschrank gefüllt sind.

9. Vorrichtung nach einem der vorhergehenden Ansprüche, **dadurch gekennzeichnet, dass** sie eine Übertragungsvorrichtung (26) aufweist, die dazu bestimmt ist, das Gemüse am Ausgang der Vorrichtung zum Herausziehen (16) aufzunehmen und es bis zum Ankommen an der ersten Auflage (7) zu transportieren, oder dass die Vorrichtung zum Herausziehen eine Verlängerung aufweist, die mit mindestens einer, vorzugsweise zwei Endumlenkrollen (19) mit kleinem Durchmesser ausgestattet ist, um eine Kontinuität des Haltens des herausgezogenen Gemüses (15) zwischen der Vorrichtung zum Herausziehen (16) und der Lagervorrichtung (2) zu gewährleisten.

10. Vorrichtung nach einem der vorhergehenden Ansprüche, **dadurch gekennzeichnet, dass** sie zu ihrem Entleeren mit einer gesteuerten Vorrichtung zum flach Hinlegen (27) der landwirtschaftlichen Produkte verbunden ist, die zwischen der Lagervorrichtung (2), die dazu bestimmt ist, entleert zu werden, und einem Transportgerät für landwirtschaftliche Produkte (28) in einer im Wesentlichen horizontalen Position angeordnet ist, wobei insbesondere die gesteuerte Vorrichtung zum flach Hinlegen zwei weiche und verformbare Bänder (33) aufweist, die jeweils an dem Eingang der Vorrichtung eine im Wesentlichen horizontale Geschwindigkeit und an dem Ausgang der Vorrichtung eine im Wesentlichen vertikale Geschwindigkeit und eine Form im Wesentlichen eines Viertel-Rings zwischen den beiden aufweisen, wobei insbesondere jedes weiche Band (33) mit einer verformbaren mechanische Kette (30) verbunden ist, die von einer Umkehrscheibe (32) mit einer im Wesentlichen horizontalen Achse am Ausgang der Vorrichtung angetrieben ist, die von einer Umkehrscheibe (32) mit einer im Wesentlichen senkrechten Achse am Eingang der Vorrichtung gehalten ist, und wobei mindestens der Strang, der an dem aktiven Teil des Bandes (33) befestigt ist, auf einer festen Schiene (39) in Form eines Viertelkreises zwischen den beiden oben erwähnten Scheiben geführt ist, wobei insbesondere das Mittel zum Befestigen jedes weichen Bandes (33) an der entsprechenden mechanischen Kette (30) aus einer Reihe von Flachstäben (31), die an die mechanische Kette geschweißt sind, und aus einem harten verformbaren Band (34), das an dem weichen Band (33) haftet, gebildet ist, wobei die Flachstäbe (31) an dem oben erwähnten harten Band mit Befestigungsmitteln befestigt sind.

11. Vorrichtung nach einem der vorhergehenden Ansprüche, **dadurch gekennzeichnet, dass** sie eine Übertragungsvorrichtung zu einer gesteuerten Vorrichtung zum flach Hinlegen der landwirtschaftlichen Produkte aus einer vertikalen Position in eine horizontale Position aufweist, die zwei weiche und verformbare Bänder (33) aufweist, die jeweils an dem Eingang der Vorrichtung eine im Wesentlichen horizontale Geschwindigkeit und an dem Ausgang der Vorrichtung eine im Wesentlichen vertikale Geschwindigkeit und eine Form im Wesentlichen eines Viertel-Rings zwischen den beiden aufweisen.

12. Maschine zum Ernten von Gemüse, insbesondere Lauch, umfassend eine Vorrichtung zum Herausziehen (16) und eine Lagervorrichtung (2) nach einem der vorhergehenden Ansprüche.

13. Verfahren zum Lagern von landwirtschaftlichen Produkten, insbesondere von Gemüse länglicher und biegsamer Art wie Lauch, insbesondere für die Anwendung einer Vorrichtung nach einem der vorhergehenden Ansprüche, **dadurch gekennzeichnet, dass** es die folgenden Schritte aufweist:
- Befestigen einer ersten leeren Auflage (7), die eine Nabe (8) aufweist, die drehbar um eine Achse (10) ist, auf einem beweglichen Gestell (3), das an einem Zugfahrzeug (1) befestigt ist,
- Befestigen einer zweiten Auflage (12), die drehbar ist, die ein Lagerband (6) aufweist, das um eine Nabe gewickelt ist, an einem festen Gestell (25), das an dem Zugfahrzeug befestigt ist (1),
- Befestigen eines Endes des Bandes (6) an der Nabe (8) der ersten Auflage (7),
- Starten einer Vorrichtung zum Herausziehen (16),
- Versetzen in Drehung der ersten Auflage (7) vor dem Ankommen der ersten landwirtschaftlichen Produkte (15) am Ausgang der Vorrichtung zum Herausziehen (16),
- Füllen der ersten Auflage (7) durch Wickeln des Bandes (6) um seine Nabe (8) und Lagerung der landwirtschaftlichen Produkte (15) zwischen zwei aufeinanderfolgenden Schichten des Bandes (6), insbesondere dadurch, dass nach dem Schritt des Füllens,
- die erste Auflage (7) von dem Zugfahrzeug abgelöst (1) wird,
- sie in eine Position gebracht wird, in der ihre Drehachse (10) horizontal ist,
- sie abgewickelt wird, um ein nachgeschaltetes Verfahren zu versorgen.

14. Verfahren zum Lagern nach Anspruch 13, insbesondere dann, wenn es von einem der Ansprüche 10 oder 11 abhängig ist, **dadurch gekennzeichnet, dass** nach dem Schritt des Füllens
- die erste Auflage (7) von dem Zugfahrzeug abgelöst (1) ist,
- sie in einer Position gehalten wird, in der ihre Drehachse (10) vertikal ist,
- sie abgewickelt wird, um ein nachgeschaltetes Verfahren zu versorgen, wobei die landwirtschaftlichen Produkte (15) von der ersten Auflage (7) zu der gesteuerten Vorrichtung zum flach Hinlegen (27) übergehen.

15. Verfahren zum Lagern nach einem der Ansprüche 13 oder 14, **dadurch gekennzeichnet, dass** eine Klinkenvorrichtung (11) auf der ersten Auflage (7) während des Schrittes des Wickelns eingerastet ist und während des Schritts des Abwickelns ausgelöst ist, so dass das Versetzen in Drehung der zweiten Auflage (12) zu ihrem Abwickeln durch die Traktion an der Bahn (6) erhalten ist, die durch das Aufwickeln auf die erste Auflage (7) erzeugt ist, und dass die Drehung der zweiten Auflage (12) mit einer Bremse (14) gesteuert ist, die auf der zweiten Auflage (12) angeordnet ist, wobei sich insbesondere je nach dem Wickeln des Bandes (6) um die Nabe (8) der ersten Auflage (7) das bewegliche Gestell (3) von dem Ausgang der Vorrichtung zum Herausziehen (16) entfernt, so dass sich die Schicht, die gerade gewickelt wird, immer in der Nähe des Ausgangs der Vorrichtung zum Herausziehen (16) befindet, wobei insbesondere die Bewegung des Entfernens des beweglichen Gestells (3) durch einen Hydraulikzylinder (4) betätigt ist und mittels eines Sensors (5) zum Erkennen der Position der Schicht, die gerade gewickelt wird, in Bezug auf den Ausgang der Vorrichtung zum Herausziehen (16) gesteuert ist, wobei insbesondere die Bewegung des Entfernens des beweglichen Gestells (3) durch ein Schubmittel betätigt ist, das in der Nähe der Umlenkrolle (13) des Lagerbandes (6) angeordnet ist, die der ersten Auflage (7) am allernächsten liegt, und sich auf die Schicht stützt, die soeben auf die erste Auflage (7) gewickelt ist, und durch die Spannung des Bandes (6) gesteuert ist, die mittels einer Bremse (14) erzeugt ist, die auf der ersten Auflage (12) angeordnet ist.

## Claims

1. Automatic storage device (2) for agricultural products (15), particularly vegetables of the long, flexible type such as leeks, which is intended to be installed on a tractor vehicle (1) in order to be filled, and to cooperate with a lifting device (16), **characterised in that** it comprises at least one storage belt (6) and a first support (7) comprising a hub (8) which is rotatable about an axis (10), designed for rolling up said storage belt (6), on the one hand, and for storing said agricultural products between two successive layers of said belt (6), on the other hand.

2. Device according to the preceding claim, **characterised in that** said roll is spirally shaped, and/or **in that** said first support (7) is provided with a latching device (11), particularly a non-return device, arranged to prevent the belt (6) from unrolling, more particularly **in that** it further comprises a second support (12) comprising a hub which is rotatable for storing the empty storage belt (6) by rolling it up, and at least one return roller (13).

3. Device according to one of the preceding claims, **characterised in that** the first support (7) has a substantially vertical rotation axis (10) when the device (2) is installed on said tractor vehicle (1), particularly **in that** said support (7) is disposed on a frame (3) which is movable relative to said tractor vehicle (1), more particularly **in that** a hydraulic jack (4) is arranged between the tractor vehicle (1) and the movable frame (3) with a view to actuation thereof, still more particularly **in that** at least one position detecting sensor (5) is arranged on a frame (25) that is fixed relative to the tractor vehicle (1) close to the storage belt return roller (13) which is closest to the first support (7), by means of which said hydraulic jack (4) can be actuated to position said support so that the outer layer of the roll is located close to said return roller (13); more particularly wherein said sensor (5) is connected to an arrangement of hydraulic distributors powered by the tractor vehicle (1).

4. Device according to one of the preceding claims, **characterised in that** it comprises an actuator mounted on said hub (8) to drive it in rotation.

5. Device according to one of claims 1 to 3, **characterised in that** it comprises a drive wheel (9) which is movable about a horizontal axis substantially secant to the rotation axis of the first support (7), said drive wheel being arranged for rotation such that it drives the rotation of said first support, notably by friction, in particular **in that** said drive wheel (9) is placed close to the rolling up of agricultural products as it takes place, preferably at a position diametrically opposite the arrival point of the agricultural products (15) relative to the rotation axis (10) of the first support (7).

6. Device according to one of the preceding claims, **characterised in that** said first support (7) comprises a substantially disc-shaped base above which the agricultural products (15) are stored, particularly **in that** the device comprises a substantially disc-shaped base which is rotatable and adapted to receive said first support (7), to support it and drive it in rotation, or wherein, when dependent on claim 5, said drive wheel (9) is positioned above said base, or below said base of the first support (7) or, respectively, said base of the device supporting said first support (7), said drive wheel (9) then being able to be attached to said fixed frame (25) near the return roller (13) closest to the first support (7) and to be placed in contact with the first support below the latter, said drive wheel, by its rotation, driving the rotation of said support so as to control its linear velocity at the roll formation taking place, irrespective of the diameter of the roll formation taking place.

7. Device according to one of claims 5 or 6, **characterised in that** said drive wheel (9) has the same outer diameter as the drive drums (22) of the holding belts (20) for the agricultural products (15) on the downstream part (17) of the lifting device (16), and **in that** said wheel (9) and said drums (22) are connected in series to the same actuator (23), thus making it possible to obtain identical rotation velocities and, respectively, a linear rolling velocity which is constantly similar to the speed of discharge of the agricultural products (15) from the lifting device (16), more particularly wherein said actuator is a hydraulic motor (23).

8. Device according to one of the preceding claims, **characterised in that** said storage belt (6) has a width such that the above-mentioned agricultural products (15) are held by said belt (6) over substantially their entire length, and/or **in that** said belt (6) is made up of a woven fabric of polymer material, notably polyethylene, the warp (36) and weft threads (37) each being separated from the following one by a space (38) imparting permeability to said belt; and/or **in that** said support (7) has openings (24) for the passage of air in the vertical direction, for cooling a plurality of filled storage devices (2) stacked in a refrigerator.

9. Device according to one of the preceding claims, **characterised in that** it comprises a transfer device (26) intended to take the vegetables from the exit from the lifting device (16) and transport them to the intake at the first support (7), or **in that** the lifting device comprises an extension equipped with at least one, preferably two, small-diameter end return rollers (19) to ensure continuity of the holding of the harvested leeks (15) between said lifting device (16) and said storage device (2).

10. Device according to one of the preceding claims, **characterised in that**, for emptying, it is associated with a device (27) for laying said agricultural products flat in controlled manner, which is installed between said storage device (2) intended to be emptied, and an apparatus for transporting agricultural products (28) in a substantially horizontal position, particularly wherein said controlled laying flat device comprises two soft, deformable belts (33) each having a substantially horizontal velocity at the entrance to the device and a substantially vertical velocity at the exit from the device, and a substantially quarter-crown shape between the two; more particularly wherein each soft belt (33) is attached to a deformable mechanical chain (30) which is driven by a sprocket wheel (32) with a substantially horizontal axis level with the exit from the device, held by a return sprocket wheel (32) with a substantially vertical axis level with the entrance to the device; and at least the strand attached to the active part of the band (33) guided on a fixed rail (39) in the form of a quarter-circle between the two above-mentioned sprocket wheels; still more particularly wherein the means of attaching each soft belt (33) to the corresponding mechanical chain (30) is made up of a set of flat members (31) welded to the mechanical chain, and a hard deformable belt (34) made to adhere to the soft belt (33), the flat members (31) being fixed to the above-mentioned hard belt by fixing means.

11. Device according to one of the preceding claims, **characterised in that** it comprises a device for transfer to a device for laying said agricultural products flat in a controlled manner from a vertical position to a horizontal position, which comprises two soft, deformable belts (33) each having a substantially horizontal velocity at the entrance to the device and a substantially vertical velocity at the exit from the device, and a substantially quarter-crown shape between the two.

12. Machine for harvesting vegetables, particularly leeks, comprising a lifting device (16) and a storage device (2) according to one of the preceding claims.

13. Method for storing agricultural products, particularly vegetables of a long, flexible type such as leeks, particularly for using a device as defined in one of the preceding claims, **characterised in that** it comprises the following steps:
- fixing an empty first support (7), comprising a hub (8) which is rotatable about an axis (10), on a movable frame (3) attached to a tractor vehicle (1)
- fixing a second support (12), which is rotatable, comprising a storage belt (6) wound round a hub, to a fixed frame (25) attached to said tractor vehicle (1)
- fixing one end of said belt (6) to the hub (8) of the first support (7)
- starting up a lifting device (16)
- setting the first support (7) in rotation before the arrival of the first agricultural products (15) at the exit from the lifting device (16)
- filling the first support (7) by winding the belt (6) about its hub (8) and storing the agricultural products (15) between two successive layers of said belt (6); particularly in that after the filling step
- the first support (7) is detached from the tractor vehicle (1)
- it is placed in a position in which its rotation axis (10) is horizontal
- it is unwound, in order to be used for a subsequent process.

14. Method of storage according to claim 13, particularly when dependent on one of claims 10 or 11, **characterised in that** after the filling step
- the first support (7) is detached from the tractor vehicle (1)
- it is held in a position in which its rotation axis (10) is vertical
- it is unwound, in order to be used for a subsequent process, the agricultural products (15) passing from the first support (7) to said controlled laying flat device (27).

15. Method of storage according to one of claims 13 or 14, **characterised in that** a latching device (11) is engaged on the first support (7) during the rolling-up step and released during the unrolling step, **in that** the second support (12) is set in rotation in order to unroll it by means of the traction on the belt (6) produced by the rolling up on the first support (7), and **in that** the rotation of the second support (12) is controlled by means of a brake (14) arranged on this second support (12), particularly **in that**, as the belt (6) is wound round the hub (8) of the first support (7), the movable frame (3) moves away from the exit from the lifting device (16) so that the layer being rolled up is always close to the exit from the lifting device (16), more particularly **in that** the movement away of the movable frame (3) is actuated by a hydraulic jack (4) and controlled with the aid of a sensor (5) which detects the position of the layer being rolled up relative to the exit from the lifting device (16), still more particularly **in that** the movement away of the movable frame (3) is actuated by a thrust means located near the return roller (13) of the storage belt (6) closest to the first support (7), and which bears on the layer that has just been wound onto the first support (7), and controlled by the tension of the belt (6) created by means of a brake (14) located on the second support (12).
